# EUROPEAN PATENT APPLICATION

(11) **EP 4 060 322 A1**
(43) Date of publication of application: **21.09.2022**
(21) Application number: 21461525.4
(22) Date of filing: 16.03.2021
(51) Int. Cl.: G01N 17/04

(54) **PROBE FOR CORROSION RATE MEASUREMENT**

(71) Applicant: Polski Koncern Naftowy Orlen S.A., 09-411 Plock (PL)
(72) Inventor: DAROWICKI, Kazimierz, 80-174 Gdansk (PL); ORLIKOWSKI, Juliusz, 81-389 Gdynia (PL); LENTKA, Grzegorz, 80-238 Gdansk (PL); CIESLIK, Mateusz, 10-762 Olsztyn (PL); DUL, Andrzej, 80-288 Gdansk (PL); GOSPOS, Radoslaw, 09-410 Plock (PL); LUKSA, Iwona, 09-410 Plock (PL)
(74) Representative: Adamczyk, Piotr

(57) **Abstract**

The probe comprises the first (3' 4') and second (3", 4") resistive element exposed to corrosive agents and the first (5') and second (5") reference resistive element isolated from said corrosive agents. All resistive elements of the probe are mechanically mounted in a common body (6) and, during the measurement, have substantially the same temperature. The first resistive element (3', 4') exposed to corrosive agents and the first reference resistive element (5') are made of non-alloy steel with carbon content not exceeding 0.002% by weight and manganese content not exceeding 0.05% by weight. The second resistive element (3", 4") exposed to corrosive agents and the second reference resistive element (5") are made of non-alloy steel with carbon content in range of 0.4 to 1% by weight and manganese content not exceeding 0.05% by weight.

## Description

The invention relates to a probe for measuring the corrosion rate of metal, particularly occurring in a corrosive environment rich in hydrogen in atomic form.

The phenomenon of corrosive degradation of metal industrial installations is well known and attempts have been made to prevent it using various safety measures and constant control of corrosion level of such installations. One of the corrosion phenomena posing a more serious risk is the so called hydrogen embrittlement which is the result of atomic hydrogen penetrating into the crystal structure of metal. In addition to the rapidly progressing decline in mechanical strength of the hydrogenated metal, this phenomenon also intensifies other types of corrosion. The hydrogenation of metal in the industrial installation originates from hydrogen present in atomic form, formed as a result of corrosion processes, or from hydrogen present in molecular form in the environment where the temperature exceeds 200°C. One of the commonly used methods of chemical corrosion rate testing is recording the increase in electrical resistance of a metal element introduced in a corrosive environment, resulting from corrosion cavities. Since the electrical resistance of metal has a strong temperature dependence, the current measured resistance of the corroding metal is compared with the resistance of an identical metal element located in the vicinity and thus under the same thermal conditions, but protected from the influence of corrosive agents. Both metal elements, the corroding one and the reference one, are placed in the measuring probe, which is located in selected places in the installation monitored for corrosion. This type of probe, available on the market, is disclosed, for example, in US6919729B2.
The hydrogenation process of steel based on the mechanism of: hydrogen embrittlement (HE), high temperature hydrogen attack (HTHA) is diagnosed mainly based on non destructive testing methods. Due to the fact that the damage occurs most often locally, detectability of possible danger is low. In the case of cracks on the steel surface involved in hydrogen embrittlement, the following diagnostic methods are used: ultrasonic testing (UT), wet fluorescent magnetic particle testing (WFMT). To diagnose internal cracks, penetration testing (PT) and magnetic particle testing (MT) are used. All of the above methods for diagnosis and monitoring do not meet the market needs, because, in most cases, these studies are performed on a material that has undergone extensive degradation. In most cases, the diagnostic methods are used during maintenance downtimes. The result of degradation is analysed and the causes of corrosion are not investigated. Therefore, it is not possible to counteract the corrosion processes. Additionally, the causes of degradation in the form of temporary malfunctions in the technological stream are often unknown. Another method is to measure the partial pressure of hydrogen in refinery streams. This solution allows determining the level of risk of high temperature hydrogen attack. However, this type of measurement does not allow determining the actual level of degradation. There is not always a correlation between the actual state and the data resulting from the hydrogen content in the stream and the temperature. This type of measurement does not allow determining the hydrogenation level in case of corrosion in the wet hydrogen sulphide environment, due to the absence of hydrogen in molecular form in the refinery streams. Another similar solution is to measure the partial pressure of hydrogen measured after the hydrogen passes through a sensor element made of structural steel. In this case, the presence of hydrogen indicates that hydrogen passed through the structural material. This type of approach is very imprecise, because the passage of hydrogen through the material is not highly correlated with its absorption. The absorption of hydrogen in steel is not linear as a function of time, therefore the correlation of hydrogen pressure measurements performed is not precise. Probe for resistive measurement of molecular hydrogen concentration is disclosed, among others, in GB850064.

The object of the invention is to provide a probe that will allow simultaneous measurement of corrosion rate causing material cavities and corrosion resulting from hydrogenation.
This object is achieved by a probe according to the invention comprising a resistive element exposed to corrosive agents and a reference resistive element isolated from said corrosive agents, wherein both resistive elements are mechanically mounted in a common probe body and, during the measurement, have substantially the same temperature. The invention is based on the fact that the probe comprises the first and second resistive elements exposed to corrosive agents and respective first and second reference resistive elements, corresponding to said elements. The first resistive element exposed to corrosive agents and the first reference resistive element are made of non-alloy steel with carbon content not exceeding 0.002% by weight and manganese content not exceeding 0.05% by weight. The second resistive element exposed to corrosive agents and the second reference resistive element are made of non-alloy steel with carbon content in range of 0.4 to 1 % by weight and manganese content not exceeding 0.05% by weight.
In one of variants of the invention, all resistive elements are made of wire. The length of the first resistive element exposed to corrosive agents is equal to the length of the first reference resistive element. The cross-section area of the first resistive element exposed to corrosive agents is equal to the cross-section area of the first reference resistive element. The length of the second resistive element exposed to corrosive agents is equal to the length of the second reference resistive element. The cross-section area of the second resistive element exposed to corrosive agents is equal to the cross-section area of the second reference resistive element. In further variants of the invention, the cross-section areas of all resistive elements are the same and/or lengths of all resistive elements are the same.
In next variant of the invention, resistive elements of the probe are made of a square cross-section wire.
In next variant of the invention, the length of the wire section forming the resistive element is two hundred and fifty to two hundred and seventy times greater than the length of the side of the square defining the outline of the cross-section of said wire.
In next variant of the invention, the first resistive element exposed to corrosive agents and the first reference resistive element form two parts of the first measuring electrode in form of a continuous section of wire, whereas the second resistive element exposed to corrosive agents and the second reference resistive element form two parts of the second measuring electrode in form of a continuous section of wire.
In next variant of the invention, in each measuring electrode, the resistive element exposed to corrosive agents has an elongated "U" shape, and thus comprises its first and second arm. The reference resistive element in the same measuring electrode has a form of a rectilinear section of wire which is an elongation of the second arm of the resistive element exposed to corrosive agents.
In next variant of the invention, both measuring electrodes are located parallelly to each other, wherein the shape and dimensions of both electrodes are the same.
In next variant of the invention, the measuring electrodes are rotated relative to each other by ninety degrees angle.
In next variant of the invention, the probe body is formed by a cylindrical member with through holes for the measuring electrodes, wherein both arms of each measuring electrode are located on one side of the cylindrical member, whereas the reference resistive elements of said electrodes are located on the other side of the cylindrical member.
In next variant of the invention, both reference resistive elements are located inside the tubular member connected to the body, wherein the space between the measuring electrodes and the inside of the tubular member and the inside of the through holes of the cylindrical member is filled with material resistant to corrosive agents.
In another variant of the invention, both arms of both measuring electrodes are located inside a perforated cover connected to the body.
In yet another variant of the invention, the cylindrical member comprises a first, second, third and fourth through hole, which are arranged evenly around the axis of the cylindrical member, wherein the free end of the first arm of the first electrode is located in the first through hole, while the end of the second arm of the first electrode is located in the third through hole, whereas the free end of the first arm of the second electrode is located in the second through hole, while the end of the second arm of the second electrode is located in the fourth through hole.

The invention allows determining the uniform corrosion rate and hydrogenation in real time (online). This enables optimisation of the amount of chemicals and a better assessment of the corrosion inhibitors and other anti-corrosive agents used. The invention increases the safety of the process and the crew operating the industrial installation and provides the possibility of planning maintenance downtimes and reducing failures, by anticipating the necessity to replace structural elements due to corrosion cavities in their thickness. Using real time measurement, the invention also facilitates assessment of the current corrosion aggressiveness of various raw materials and immediate response in case of detecting a corrosion risk.
The possibility to determine the hydrogen content of the structural material facilitates assessment of the effect of technological parameters of the process and the type of raw material on the hydrogen penetration into the material of the installation, and as a result, it is possible to assess the degree of decrease in the strength parameters of the structural material resulting from the hydrogen content and to verify whether this decrease has not already reached a critical value.

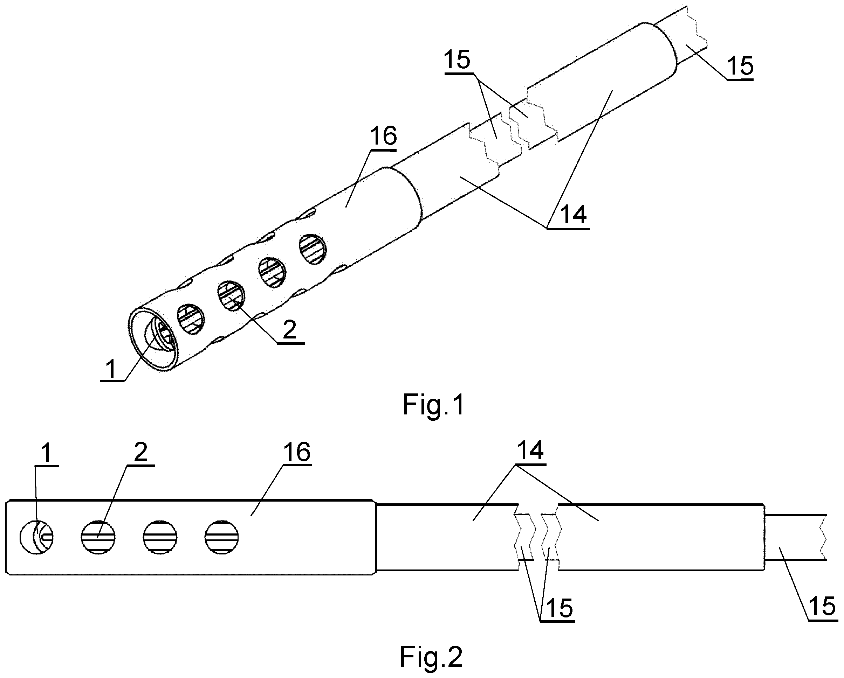

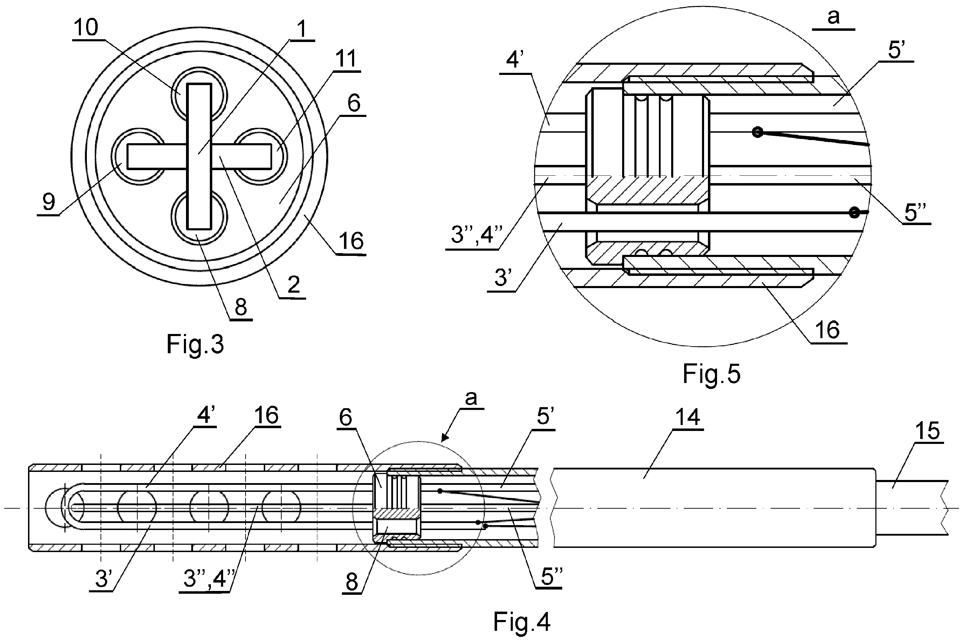

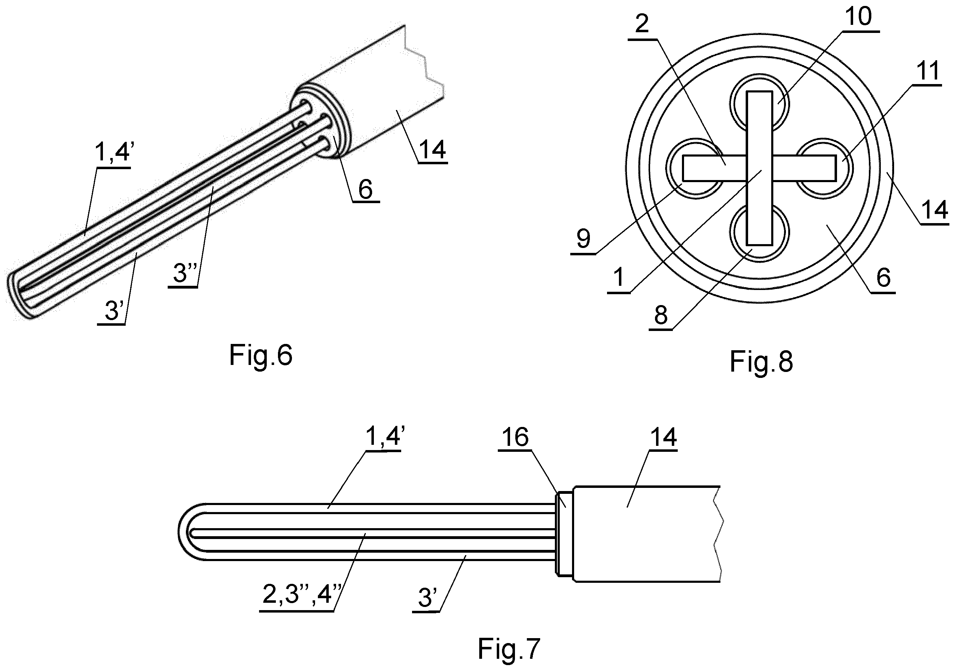

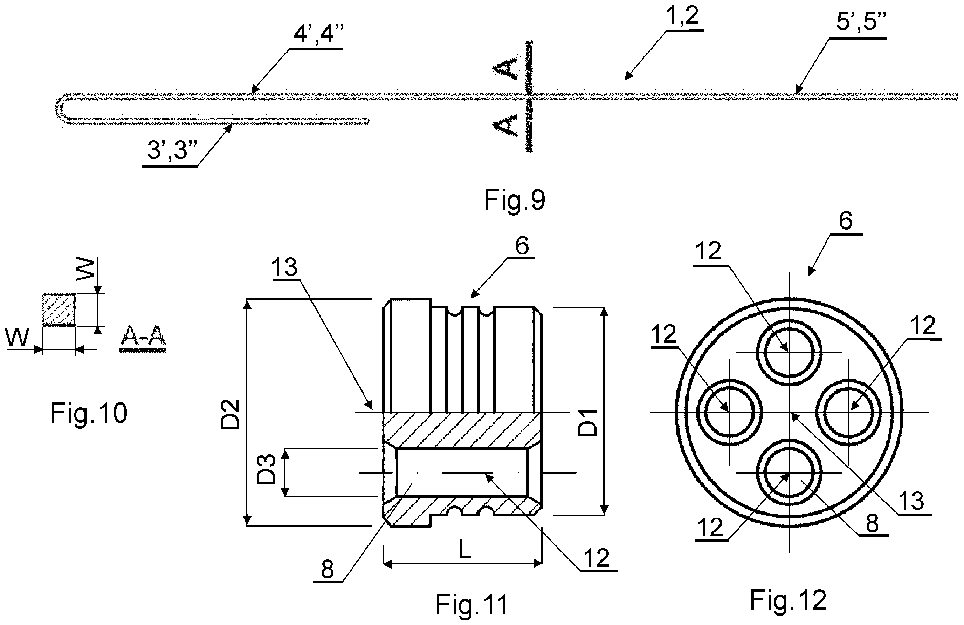

The exemplary embodiment of the invention has been described in detail and illustrated in the attached drawings, without keeping the same scale in the individual figures. Fig.1 shows a front axonometric view of the probe according to the invention, Fig.2 shows a side view of the probe, Fig.3 shows a front view of the probe, Fig.4 shows a longitudinal cross-section of the probe and Fig.5 shows an enlarged portion of the cross-section in Fig.4. Fig.6, Fig.7, and Fig.8 show portions of probe views in Fig.1, Fig.2, and Fig.3, respectively, but with the electrode cover removed. Fig.9 shows a side view of the wire electrode of the probe, and Fig.10 shows the shape of wire cross-section of the electrode in a plane perpendicular to the wire axis. Fig.11 shows a side view of the probe body of Fig.1, and Fig.12 shows the front view of the body.

The exemplary probe according to the invention has two resistive measuring electrodes 1 and 2. One part of the electrode is exposed to corrosive agents, while its other part is insulated from this exposure and constitutes a reference element. The corrosion rate measurement in the probe according to the invention includes comparing the electrical resistance of the resistive element of the measuring electrode exposed to corrosive agents with the electrical resistance of the reference element of the same electrode. Both electrodes 1 and 2 are made of a square cross-section wire. The side length W of this square cross-section is 1.5 mm. The total length of the rectilinear section of the wire forming each electrode 1 and 2 is about 400 mm, wherein, in each electrode 1 and 2, one of the ends, with a length of about 100 mm, is bent at an angle of 180 degrees, forming an elongated "U" shape with the adjacent part of the electrode, having a first arm 3 and a second arm 4. The section of the electrode wire forming the first 3 and second 4 arm of "U" constitutes a resistive element exposed to corrosive agents, while the rectilinear section 5 of the wire, being an elongation of the second arm 4, constitutes a reference resistive element. The first electrode 1 is used to measure the so-called ordinary corrosion, that is, resulting in material cavities, while the second electrode 2 is used to measure the so-called hydrogen corrosion, that is, the level of metal hydrogenation. Consequently, in the probe according to the invention, the arms 3' and 4' of the first electrode 1 constitute the first resistive element exposed to corrosive agents, the rectilinear section 5' of the first electrode 1 constitutes the first reference resistive element, the arms 3" and 4" of the second electrode 2 constitute the second resistive element exposed to corrosive agents, and the rectilinear section 5" of the second electrode 2 constitutes the second reference resistive element. Electrode 1 is made of non-alloy steel with carbon content not exceeding 0.002% by weight and manganese content not exceeding 0.05% by weight, whereas the second electrode 2 is made of non-alloy steel with carbon content in range of 0.4% to 1% by weight and manganese content not exceeding 0.05% by weight. For example, the first electrode 1 can be made of steel type 06J, 03J, or Armco 1, and the second electrode 2 can be made of steel type 1.7053, 1.7225, or 1.6511. Both electrodes 1 and 2 are mechanically embedded in a cylindrical body 6 made of stainless steel, e.g. steel type 1.4301, wherein the arms 3 and 4 of each electrode 1 and 2 are located on one side of the body 6, while the reference resistive elements 5 of the electrodes are located on the other side of the body 6. The body 6 has the form of a cylinder with a diameter D1 of 13 mm and a length L of 10 mm. At its first end, the cylinder has a flange 7 with a diameter D2 of approx. 14 mm. The body 6 has a first 8, second 9, third 10 and fourth 11 through hole, each with a diameter D3 of 2 mm. The axis 12 of each said hole (8, 9, 10, 11) is parallel to the axis 13 of the body 6. The axes 12 of the holes 8, 9, 10, and 11 are located on a circle with a diameter of 8 mm, coaxial with the axis 13 of the body 6, and evenly spaced by 90 degrees angles. The free end of the first arm 3' of the first electrode 1 is located in the first through hole 8, while the end of the second arm 4' of the first electrode 1 is located in the third through hole 10. The free end of the first arm 3" of the second electrode 2 is located in the second through hole 9, while the end of the second arm 4" of the second electrode 2 is located in the fourth through hole 11. Thus, the first electrode 1 is rotated relative to the second electrode by 90 degrees angle. The body 6 is fitted into the tube 14 made of stainless steel of the same type as the steel of the body 6. The tube 14 surrounds the reference elements 5' and 5" of electrodes 1 and 2 and the starting section of an at least six-conductor signal cable 15, for example of the Olflex EB CY type. The individual wires of the cable 15 are connected to the electrodes 1 and 2 at their ends and at substantially half-length. The space between the electrodes 1 and 2 and the walls of the through holes 8, 9, 10, and 11 and the inner wall of the tube 14 is filled with a two-component epoxy resin, for example of the Belzona 1593 or 1391T type. The filling secures the electrodes 1 and 2 mechanically in the housing 6 and protects the reference elements 5 and the electrical connections to the cable 15 from corrosive agents. The parts of the electrodes 1 and 2 that protrude from the body 6 are protected from damage by a perforated tubular cover 16, screwed onto the threaded end of the tube 14 adjacent to the body 6, and also made of the same stainless steel as the body 6. The probe according to the invention is mounted in a known manner to the supervised structure in the place where corrosive agents are present, and the cable 15 is connected to a known measuring system, not shown in the drawings, that measures the electrical resistance of individual resistive elements 3, 4, and 5 of electrodes 1 and 2. A known wireless communication module may be connected to said measurement system, which relays the measurement results to a computer, which archives the received results and, based on said results, calculates the corrosion rate and visualizes it, for example, on a screen display.

## Claims

1. A resistive probe for corrosion rate measurement, comprising a resistive element exposed to corrosive agents and a reference resistive element isolated from said corrosive agents, wherein, in said probe, both resistive elements are mechanically mounted in a common probe body and, during the measurement, have substantially the same temperature, **characterised in that** it comprises the first (3' 4') and second (3", 4") resistive element exposed to corrosive agents and respective first (5') and second (5") reference resistive element, corresponding to said elements, wherein the first resistive element (3', 4') exposed to corrosive agents and the first reference resistive element (5') are made of non-alloy steel with carbon content not exceeding 0.002% by weight and manganese content not exceeding 0.05% by weight, whereas the second resistive element (3", 4") exposed to corrosive agents and the second reference resistive element (5") are made of non-alloy steel with carbon content in range of 0.4 to 1% by weight and manganese content not exceeding 0.05% by weight.

2. Probe according to claim 1, **characterised in that** all resistive elements (1, 2) are made of wire, the length of the first resistive element (3', 4') exposed to corrosive agents is equal to the length of the first reference resistive element (5'), the cross-section area of the first resistive element (3', 4') exposed to corrosive agents is equal to the cross-section area of the first reference resistive element (5'), the length of the second resistive element (3", 4") exposed to corrosive agents is equal to the length of the second reference resistive element (5"), while the cross-section area of the second resistive element (3", 4") exposed to corrosive agents is equal to the cross-section area of the second reference resistive element (5").

3. The probe according to claim 2, **characterised in that** the cross-section areas of all resistive elements (1, 2) are the same.

4. The probe according to claim 2 or 3, **characterised in that** the lengths of all resistive elements (1, 2) are the same.

5. The probe according to claim 4, **characterised in that** the resistive elements (1, 2) are made of a square cross-section wire.

6. The probe according to claim 5, **characterised in that** the length of the wire section forming the resistive element (1, 2) is two hundred and fifty to two hundred and seventy times greater than the length (W) of the side of the square defining the outline of the cross-section of said wire.

7. The probe according to claim 4 or 5 or 6, **characterised in that** the first resistive element (3', 4') exposed to corrosive agents and the first reference resistive element (5') form two parts of the first measuring electrode (1) in form of a continuous section of wire, whereas the second resistive element (3", 4") exposed to corrosive agents and the second reference resistive element (5") form two parts of the second measuring electrode (2) in form of a continuous section of wire.

8. The probe according to claim 7, **characterised in that,** in each measuring electrode (1, 2), the resistive element (3, 4) exposed to corrosive agents has an elongated "U" shape, and thus comprises its first (3) and second (4) arm, while the reference resistive element (5) has a form of a rectilinear section of wire being an elongation of the second arm of the resistive element exposed to corrosive agents.

9. The probe according to claim 8, **characterised in that** both measuring electrodes (1, 2) are located parallelly to each other, wherein the shape and dimensions of both electrodes (1, 2) are the same.

10. The probe according to claim 9, **characterised in that** the measuring electrodes (1, 2) are rotated relative to each other by ninety degrees angle.

11. The probe according to claim 10, **characterised in that** the probe body (6) is formed by a cylindrical member with through holes (8, 9, 10, 11) for the measuring electrodes (1, 2), wherein both arms (3, 4) of each measuring electrode (1, 2) are located on one side of the cylindrical member (6), whereas the reference resistive elements (5) of said electrodes (1, 2) are located on the other side of the cylindrical member (6).

12. The probe according to claim 11, **characterised in that** both reference resistive elements (5) are located inside the tubular member (14) connected to the body (6), wherein the space between the measuring electrodes (1,2) and the inside of the tubular member (14) and the inside of the through holes (8,9, 10,11) of the cylindrical member (6) is filled with material resistant to corrosive agents.

13. The probe according to claim 11 or 12, **characterised in that** both arms (3, 4) of both measuring electrodes (1, 2) are located inside a perforated cover (16) connected to the body (6).

14. The probe according to claim 11 or 12 or 13, **characterised in that** the cylindrical member (6) comprises a first (8), second (9), third (10) and fourth (11) through hole, which are arranged evenly around the axis (13) of the cylindrical member (6), wherein the free end of the first arm (3') of the first electrode (1) is located in the first through hole (8), while the end of the second arm (4') of the first electrode (1) is located in the third through hole (10), whereas the free end of the first arm (3") of the second electrode (2) is located in the second through hole (9), while the end of the second arm (4") of the second electrode (2) is located in the fourth through hole (11).
